# EUROPÄISCHE PATENTANMELDUNG

(11) **EP 0 949 495 A1**
(43) Veröffentlichungstag der Anmeldung: **13.10.1999**
(21) Anmeldenummer: 99104086.6
(22) Anmeldetag: 18.03.1999
(51) Int. Cl.: G01M 17/007, G05D 1/03

(54) **Simulationsanordnung für Kraftfahrzeugunfälle und Verfahren zur Simulation von Kraftfahrzeugunfällen**

(30) Priorität: 02.04.1998 DE 19814848
(71) Anmelder: Volkswagen Aktiengesellschaft, 38436 Wolfsburg (DE)
(72) Erfinder: Bahr, Ullrich, Dr., 38110 Braunschweig (DE); Weiser, Florian, Dr., 38468 Ehra-Lessien (DE); Hentschel, R., Dr., 30455 Hannover (DE)

(57) **Zusammenfassung**

Die vorliegende Erfindung betrifft eine Simulationsanordnung für Kraftfahrzeugunfälle mit einer Fahrbahn (10), auf der wenigstens ein Kraftfahrzeug (12) auf einen Kollisionspunkt mit einem Hindernis oder einem anderen Kraftfahrzeug zubewegbar ist. Hierbei sind auf der Fahrbahn (10) diskrete Markierungen (16,18) angeordnet und am Fahrzeug (12) ist ein Abtastsystem (20,22,24) angeordnet, welches die optischen Markierungen (16,18;28) auf der Fahrbahn (10) registriert, wobei die Markierungen (16,18;28) und das optische Abtastsystem (20,22,24) derart ausgebildet sind, daß eine mit dem Abtastsystem (20,22,24) verbundene Steuereinheit (20) entsprechende automatische Steuerfunktionen am Fahrzeug (12) derart ausführt, daß sich das Fahrzeug (12) entlang der Markierungen (16,18) mit einer vorbestimmten Geschwindigkeit bewegt.

## Beschreibung

Die Erfindung betrifft eine Simulationsanordnung für Kraftfahrzeugunfälle mit einer Fahrbahn, auf der wenigstens ein Kraftfahrzeug auf einen Kollisionspunkt mit einem Hindernis oder einem anderen Kraftfahrzeug zubewegbar ist, gemäß dem Oberbegriff des Anspruchs 1. Die Erfindung betrifft ferner ein Verfahren zur Simulation von Kraftfahrzeugunfällen, wobei wenigstens ein Kraftfahrzeug auf einer Fahrbahn auf einen Kollisionspunkt mit einem Hindernis oder einem anderen Kraftfahrzeug zubewegt wird, gemäß dem Oberbegriff des Anspruchs 12.

In einem klassischen Crashtest fährt das Fahrzeug oder Crashfahrzeug nicht mit eigener Kraft, sondern wird mit einem Zugseil und externem Antrieb, beispielsweise mittels Fallgewichten, angeschleppt, wobei die Geschwindigkeitsregelung Aufgabe des Antriebs ist. An dem fest mit dem Fahrzeug gekoppelten Zugseil läßt sich eine Positions- und Geschwindigkeitsmeßeinrichtung installieren, so daß diese Versuche mit hoher Aufprall-Reproduzierbarkeit ausgeführt werden können. Die so gewonnenen Meßergebnisse haben jedoch gewisse Differenzen zu tatsächlich in der Praxis auftretenden Unfällen und Brandgefahr, weil einerseits der Fahrzeugantrieb ausgekuppelt ist und die kinetische Energie der Antriebsteile nicht zur Wirkung kommt und andererseits aufgrund des Einflusses von bestimmten Betriebszuständen des Kraftfahrzeuges.

Zur Verbesserung der Vergleichbarkeit von Crashtestergebnissen mit realen Unfällen wird daher in der EP 0 445 671 A1 eine Vorrichtung und ein Verfahren zum Überprüfen von Wirkungen eines Kraftfahrzeugunfalls vorgeschlagen, bei dem wenigstens ein Kraftfahrzeug an einen vorher definierten Kollisionspunkt mit seinem eigenen Antrieb geführt wird. Hierzu sind der bordeigene Fahrzeugantrieb, eine eventuelle Kupplung sowie eine Bremse durch Stellglieder mit einem Druckmittelbetätigungssystem verbunden, welches neben einem Vorratsbehälter selektiv ansprechbare Ventile aufweist. Das Kraftfahrzeug wird ferngesteuert gemäß vorgegeben Bewegungsparametern geführt, wobei ein Speicher mit Soll-Werten für diese Bewegungsparameter vorgesehen ist. Ein Bordregler ist dabei mit Sensoren im Kraftfahrzeug verbunden und nimmt dadurch Ist-Werte der Bewegungsparameter auf. Das oder die Fahrzeuge werden an einem Leitkabel auf einem vorbestimmten Weg geführt. Dieses Leitkabel ist an oder in einer Fahrbahn angeordnet.

Eine derartige autonome Fahrzeugsteuerung bietet dann besondere Vorteile, wenn komplexe Unfallvorgänge untersucht werden sollen, wie beispielsweise Kreuzungsunfälle, bei denen sich zwei Fahrzeuge mit verschiedener Geschwindigkeit unter vorgegebenem Winkel treffen sollen. Die Steuerung sollte daher derart ausgelegt sein, daß auch solche Anforderungen erfüllt werden.

Für eine entsprechende Führung des Kraftfahrzeuges auf einen vorbestimmten Kollisionspunkt zu ist beispielsweise aus der vorgenannten EP 0 445 671 A1 sowie der DE 42 33 454 bereits ein Verfahren zur autonomen Fahrzeugsteuerung bekannt, welche ein fest verlegtes Niederfrequenz-Leitkabel mit einem induktiven Sensor am Fahrzeug verwendet. Dies erzielt zwar eine ausreichende Führungs- und Zielgenauigkeit quer zum Fahrzeug, jedoch ergibt sich der Nachteil, daß sich eine lediglich ungenaue Geschwindigkeits- und Ortsbestimmung ergibt, die im wirksamen Durchmesser des Rades liegt. Diese Fehler liegen dabei wesentlich über denjenigen, welche sich bei Geschwindigkeits- und Ortsbestimmungen mit einem Seilzugsystem ergeben. Desweiteren ist der Vorbereitungsaufwand für die Montage des Inkrementalgebers anzuführen. Ferner ist es von Nachteil, daß die Führungsfunktion des Niederfrequenz-Leitkabels nur auf nichtleitendem Untergrund gewährleistet ist. Bei Verlegung auf einem stahlarmierten Boden kommt es zu Störungen der Führungsfunktion.

Aus der DE 43 12 160 A1 ist eine optoelektronische Vorrichtung zur Verkehrserfassung bekannt, wobei ein vorbestimmter Abschnitt einer Straße mittels Markierungen in wenigstens zwei hintereinander liegende Zonen unterteilt ist. Ein optoelektronischer Aufnehmer registriert dabei ein Fahrzeug, welches über diese Zonen fährt. Diese Anordnung dient lediglich zur Verkehrserfassung und ist als Steuerung für ein selbstfahrendes Crashfahrzeug nicht geeignet.

Der vorliegenden Erfindung liegt daher die Aufgabe zugrunde, eine Simulationsanordnung und ein Verfahren der obengenannten Art zur Verfügung zu stellen, wobei die obengenannten Nachteile überwunden werden und eine Fahrzeugführung für einen Crashtest mit guter Zielgenauigkeit und präziser Geschwindigkeits- und Lageregelung zur Verfügung zu stellen.

Diese Aufgabe wird erfindungsgemäß durch eine Simulationsanordnung der o.g. Art mit den in Anspruch 1 gekennzeichneten Merkmalen und durch ein Verfahren der o.g. Art mit den in Anspruch 12 gekennzeichneten Merkmalen gelöst. Vorteilhafte Ausgestaltungen der Erfindung sind in den abhängigen Ansprüchen angegeben.

Dazu ist es bei einer Simulationsanordnung erfindungsgemäß vorgesehen, daß auf der Fahrbahn diskrete Markierungen angeordnet sind und am Fahrzeug ein Abtastsystem angeordnet ist, welches die diskreten Markierungen auf der Fahrbahn registriert, wobei die Markierungen und das Abtastsystem derart ausgebildet sind, daß eine mit dem Abtastsystem verbundene Steuereinheit entsprechende automatische Steuerfunktionen am Fahrzeug derart ausführt, daß sich das Fahrzeug entlang der Markierungen mit einer vorbestimmten Geschwindigkeit bewegt.

Dies hat den Vorteil, daß eine einfache, kostengünstige und betriebssichere Fahrzeugführung für ein Fahrzeug in einem Crashversuch mit guter Zielgenauigkeit und präziser Geschwindigkeits- und Lageregelung zur Verfügung steht. Hierbei erlauben die diskreten Markierungen gleichzeitig sowohl einen Rückschluß auf seitliche Abweichungen des Fahrzeugs von den Markierungen, als auch einen Rückschluß auf eine momentane Fahrzeuggeschwindigkeit, beispielsweise durch Messen einer Zeitspanne zwischen zwei aufeinanderfolgend abgetasteten Markierungen mit vorbekanntem Abstand. Ferner ist zusätzlich eine exakte Lagebestimmung bzgl. eines vorbestimmten Kollisionspunktes möglich.

In einer bevorzugten Ausführungsform sind die Markierungen optische, radioaktive, fluoreszierende, erhabene, vertiefte und/oder induktive Markierungen und ist das Abtastsystem ein optisches, Radioaktivität erfassendes, Erhebungen/Vertiefungen erfassendes, Fluoreszenz erfassendes und/oder induktives Abtastsystem.

Eine gute Abtastbarkeit der Markierungen erzielt man dadurch, daß die Markierungen derart ausgebildet sind, daß sie einen hohen Kontrast zu einem Hintergrund haben. Die Markierungen sind beispielsweise weiß auf schwarzem Hintergrund ausgebildet.

In einer besonders bevorzugten Ausführungsform sind die Markierungen als Streifenraster oder codiert, insbesondere als Manchester Code, ausgebildet.

Einen Meilenstein, welcher beispielsweise in der Art einer Triggermarke eine bestimmte Position anzeigt und/oder vorbestimmte Vorgänge beginnen und/oder enden läßt, erzielt man in vorteilhafter Weise dadurch, daß wenigstens eine Markierung als individuell erkennbare Markierung ausgebildet ist.

Zweckmäßigerweise sind die Markierungen als wenigstens ein Strang, insbesondere als zwei oder mehr Stränge mit vorbestimmtem Abstand quer zur Fahrtrichtung, ausgebildet.

In einer besonders bevorzugten Ausführungsform umfaßt die Abtastvorrichtung wenigstens zwei CCD-Kameras, welche insbesondere auf wenigstens einer Linie parallel zur Fahrtrichtung des Kraftfahrzeuges angeordnet sind.

Zweckmäßigerweise weist die Steuereinheit eine Auswerte- und Steuerungselektronik auf.

Eine besonders einfache Anordbarkeit der Markierungen mit hoher Flexibilität bei gleichzeitig hoher Betriebssicherheit erzielt man dadurch, daß die Markierungen auf einem auf der Fahrbahn verlegten Leitband oder Folie angeordnet sind ( 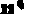 ausgerollter Teppich").

Bei einem Verfahren ist es erfindungsgemäß vorgesehen, daß auf der Fahrbahn angeordnete diskrete Markierungen von einem im Fahrzeug angeordneten Abtastsystem registriert werden und eine mit dem Abtastsystem verbundene Steuereinheit entsprechende automatische Steuerbefehle zum Steuern des Fahrzeugs derart erzeugt, daß das Fahrzeug entlang der Markierungen mit einer vorbestimmten Geschwindigkeit bewegt wird.

Dies hat den Vorteil, daß eine einfache, kostengünstige und betriebssichere Fahrzeugfuhrung für ein Fahrzeug in einem Crashversuch mit guter Zielgenauigkeit und präziser Geschwindigkeits- und Lageregelung zur Verfügung steht. Hierbei erlauben die diskreten Markierungen gleichzeitig sowohl einen Rückschluß auf seitliche Abweichungen des Fahrzeugs von den Markierungen, als auch einen Rückschluß auf eine momentane Fahrzeuggeschwindigkeit, beispielsweise durch Messen einer Zeitspanne zwischen zwei aufeinanderfolgend abgetasteten Markierungen mit vorbekanntem Abstand. Ferner ist zusätzlich eine exakte Lagebestimmung bzgl. eines vorbestimmten Kollisionspunktes möglich.

Zweckmäßigerweise wird eine optische, radioaktive, fluoreszierende, erhabene, vertiefte und/oder induktive Markierungen verwendet werden und ein entsprechendes optisches, Radioaktivität erfassendes, Erhebungen/Vertiefungen erfassendes, Fluoreszenz erfassendes und/oder induktives Abtastsystem verwendet.

In einer besonders bevorzugten Ausführung des Verfahrens wird ein in den diskreten Markierungen enthaltender Code zur Lagebestimmung des Kraftfahrzeugs ausgewertet.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine bevorzugte Ausführungsform einer erfindungsgemäßen Simulationsanordnung,
- Fig. 2: eine bevorzugte Ausführungsform eines Abtastsystems für eine erfindungsgemäße Simulationsanordnung und
- Fig. 3: eine bevorzugte Ausführungsform diskreter Markierungen in Form eines Manchester Codes für eine erfindungsgemäße Simulationsanordnung.

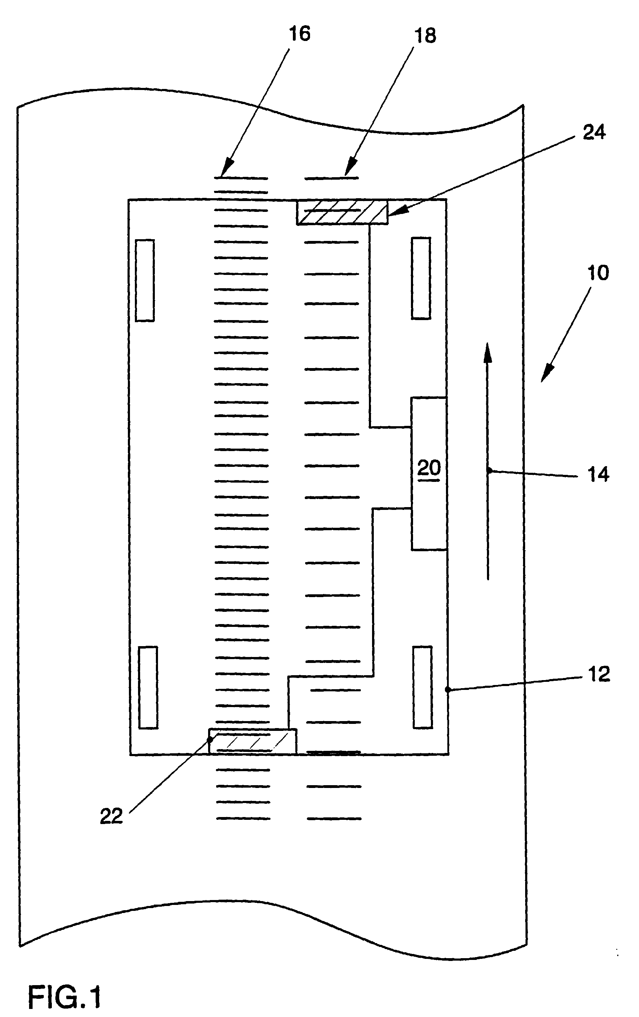

Die in Fig. 1 beispielhaft dargestellte bevorzugte Ausführungsform einer erfindungsgemäßen Simulationsanordnung umfaßt eine Fahrbahn 10, auf welcher ein Kraftfahrzeug 12 in Fahrtrichtung 14 selbstfahrend, d.h. mit eigenem Antrieb, und automatisch gesteuert, d.h. nicht mit einem Fahrer besetzt, auf einen nicht dargestellten vorbestimmten Kollisionspunkt zufährt. Auf der Fahrbahn 10 sind diskrete Markierungen 16 und 18, beispielsweise in Form eines vorbestimmten Codes, in zwei Strängen angeordnet. Dies ist lediglich beispielhaft, es könnte auch nur ein Strang oder es könnten auch drei und mehr Stränge vorgesehen sein. Am Kollisionspunkt ist entweder ein Hindernis angeordnet oder es bewegt sich gleichzeitig wenigstens ein zweites Fahrzeug entlang eines entsprechend anderen Markierungsstranges auf den Kollisionspunkt derart zu, daß die Fahrzeuge gleichzeitig am Kollisionspunkt eintreffen und miteinander kollidieren.

Am Kraftfahrzeug 12, welches auch als Crashfahrzeug bezeichnet wird, ist ein Abtastsystem mit einer Auswerte- und Steuereinheit 20 und zwei daran angeschlossenen CCD-Kameras 22 und 24 angeordnet. Die CCD-Kameras 22 und 24 sind dabei jeweils auf einer Geraden parallel zur Fahrtrichtung 14 derart angeordnet, daß jeweils eine CCD-Kamera 22 bzw. 24 einen Markierungsstrang 16 bzw. 18 abtastet. Alternativ sind für einen Markierungsstrang 16, 18 zwei CCD-Kameras an voneinander beabstandeten Positionen am Kraftfahrzeug 12 auf einer einzigen Geraden im wesentlichen parallel zur Fahrtrichtung vorgesehen.

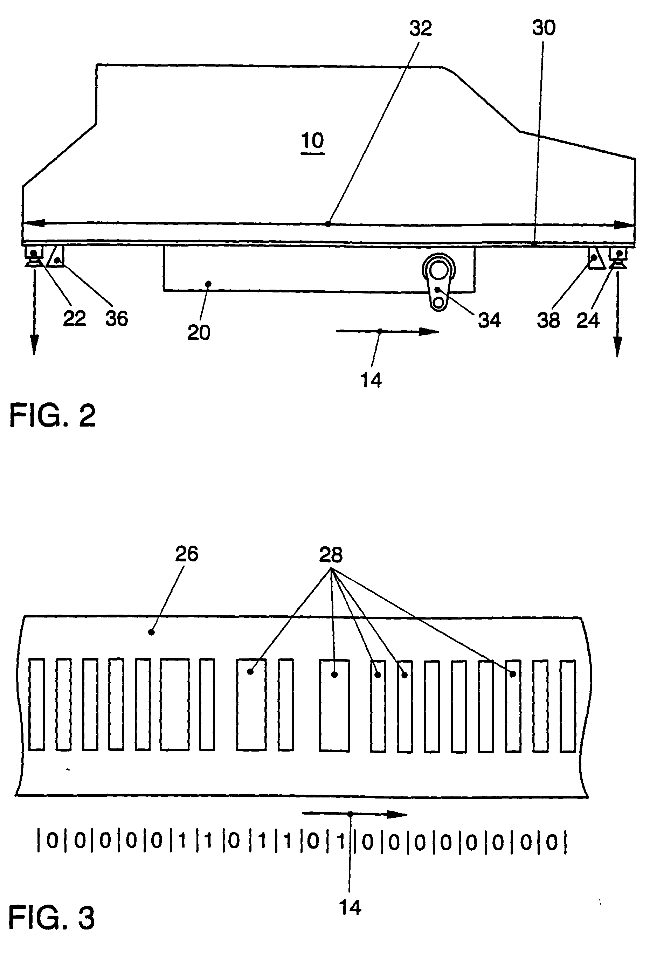

Fig. 3 zeigt beispielhaft ein Leitband 26, auf dem diskrete Markierungen 28 in Form eines Manchester Codes angeordnet sind. Das Leitband 26 umfaßt ein schwarzes Grundmaterial, welches mit einem kontrastreichen weißen Muster 28 bedruckt ist. Das Leitband 26 dient zur Führung des Crashfahrzeuges 12 (Fig. 1), indem es auf einer Sollspur auf der Fahrbahn 10 (Fig. 1) aufgespannt und befestigt wird. Quer zur Fahrtrichtung 14 haben die Streifen 28 eine konstante Breite, so daß mit optischen Abtastverfahren ein Fahrzeugkurs geregelt wird. Das Streifenmuster 28 läßt sich codieren, so daß sowohl eine Geschwindigkeitsmessung durch Auswerten von beispielsweise äquidistanten Schwarz-Weiß-Übergängen als auch eine Ortsbestimmung durch Auswerten des Codes selbst möglich ist. Bei der beispielhaften Ausführungsform von Fig. 3 handelt es sich um einen sogn. Manchester Code, wobei eine Schwarzweißflanke jeweils ein Bit repräsentiert. Bei einer Null folgt in Fahrtrichtung 14 schwarz auf weiß und bei einer Eins folgt in Fahrtrichtung 14 weiß auf schwarz. Mit einer Auswertung derartiger Codierungen lassen sich vorgegebene Punkte auf dem Streifen 16 mit Markierungen versehen, die einen Absolutwert für eine Lagebestimmung angeben.

Eine Absolutcodierung mit einer Angabe beispielsweise im Millimeterbereich erfordert 20 Nutzbit (1.000.000 mm = 1 km Maximalweg) und 8 Bit Barkercode als Markierung. Bei einer Bitbreite von beispielsweise 6 mm hat ein sogn. "Meilenstein" als Positionsmarkierung damit eine Länge von 168 mm. Diese Meilensteine werden wesentlich kürzer, wenn beispielsweise nur Meterwerte ohne Nachkommastellen codiert werden.

Das Leitband 26 kann als Rollenmaterial mit einem symmetrischen Schwarzweißmuster 28 bedruckt sein und enthält damit als Code nur Nullen, deren Flanken für die Geschwindigkeitsmessung nutzbar sind. Die Meilensteine lassen sich mit ihren jeweiligen kurzen Längen preiswert beispielsweise mittels eines Laserdruckers oder mittels Siebdruck herstellen und werden bevorzugt erst nach dem Verlegen und Ausrichten des Leitbandes 26 eingemessen und befestigt, beispielsweise aufgeklebt. Mit der Absolutcodierung der Meilensteine und der präzisen Plazierungsmöglichkeit nach Verlegen des Bandes sind die Anforderungen an die Druckqualität des Rollenbandes nicht mehr so hoch, weil die Meilensteine Korrekturmöglichkeiten bzw. eine entsprechende Synchronisation bieten.

Zum Abtasten des Leitbandes 26 sind zwei CCD-Kameras 22, 24 vorteilhaft, wie nachstehend unter Bezugnahme auf Fig. 2 beschrieben. Diese sind in vielfältigen Ausführungen erhältlich und mit ihrer kleinen Bauart mit einem Volumen von beispielsweise wenigen cm³ hinreichend crashfest. Die Abtastrichtung liegt quer zur Fahrtrichtung 14. Die Größe eines Bildausschnittes und die Auswahl der Optik hängen von der gewünschten Regelgüte des Systems ab. Beispielsweise ist ein Fangbereich von +/- 100 mm vorgesehen.

Eine CCD-Kamera 22, 24 mit beispielsweise 5,12 MHz Abtastrate und 128 Pixeln liefert eine Quer-Abtastrate von 40 kHz. Bei einer sehr hoch angesetzten Fahrgeschwindigkeit von beispielsweise 40 m/s wird damit das Leitband 26 in einem Abstand von 1 mm abgetastet. Die in Fig. 3 dargestellten Streifen 28 werden damit jeweils mindestens 2 mal getroffen, so daß sowohl die Kursregelung durch Auswerten der Querabweichung als auch die Codeerkennung für die Geschwindigkeits- und Lageregelung gewährleistet ist.

Das in Fig. 2 beispielhaft dargestellte Abtastsystem umfaßt die Auswerte- und Steuerelektronik 20 und die damit verbundenen CCD-Kameras 22 und 24. Diese Komponenten sind an einer Montageplatte 30 an einem Unterboden des Kraftfahrzeuges 12 angeordnet, wobei die CCD-Kameras 22 und 24 in einem Abstand 32 von beispielsweise ca. 1 m auf einer Geraden im wesentlichen parallel zur Fahrtrichtung 14 angeordnet sind. Die Auswerte- und Steuerelektronik 20 umfaßt beispielsweise einen Lenkhebel 34, mittels dem diese Einfluß auf die Lenkung des Kraftfahrzeuges 12 nimmt.

Die erfindungsgemäße Simulationsanordnung erzielt eine gute Kursregelung, wobei nicht nur der Seitenversatz des Fahrzeugs 10 als Resultat der Abweichung vom optimalen Fahrkurs, sondern gleichzeitig eine Winkelabweichung vom Sollkurs erfaßt wird. Hierzu werden in einem vorbestimmten Abstand die beiden CCD-Kameras 22 und 24 angeordnet, so daß ein Sensor weit vor dem Fahrzeug, welcher sich wegen des Crasheinsatzes verbietet, vermieden ist. Die CCD-Kameras 22, 24 sind dabei bevorzugt unter dem Fahrzeug 10 außerhalb von Crash-Einwirkzonen montiert. Jeder CCD-Kamera 22, 24 ist eine Beleuchtungseinrichtung 36, 38 zugeordnet. Eine ggf. vorhandene Winkelabweichung zwischen Kameramontagelinie und Spur des Fahrzeugs kann das Regelsystem in einer Anfahrphase erkennen und korrigieren. Unter dem Fahrzeug wird Fremdlicht weitgehend ferngehalten. Insbesondere in der Crashzone mit der hellen Ausleuchtung für High-Speed-Kameras treten somit keine Störungen des erfindungsgemäßen Führungssystems auf.

Als Stellglieder für die Geschwindigkeitsregelung der Fahrzeuge kommen beispielsweise serienmäßige Zubehörteile zum Einsatz. Die Lenkung erfolgt beispielsweise mit einem Elektromotor-Stellglied mit direkter Einwirkung auf die Spurstange oder durch den Lenkhebel 34. Die Ankopplung zum Stellglied ist bevorzugt abwerfbar ausgebildet, damit es nicht beim Crashtest beschädigt wird. Hierzu ist bevorzugt eine geeignete Vorrichtung vorgesehen. Zum Anfahren des Fahrzeugs 10 und ggf. Gangwechseln erfolgt zweckmäßigerweise eine Betätigung einer Kupplung. Hierzu sind insbesondere fahrzeugspezifische Adapter mit beispielsweise Bowdenzügen oder Pneumatikelementen vorgesehen.

Das Anfahren erfolgt beispielsweise im zweiten Gang, welcher einen hinreichenden Geschwindigkeitsbereich überdeckt. Ein ggf. erforderliches Umschalten in den dritten Gang ist dann ein einmaliger Schaltvorgang und erfolgt bevorzugt mittels Auslösen eines Feder-/Dämpferelementes, welches beispielsweise in kleiner Ausführung direkt an einem Ganghebel montiert ist.

Die komplette Steuereinheit 20 für das Fahrzeug 10 ist beispielsweise in crashfester Ausführung in einem flachen Gehäuse mit ca. 300 x 500 x 70 mm angeordnet. Die beispielsweise ca. 1 m lange Montageplatte 30 ist bevorzugt mit einem seitlich heruntergezogenen, stabilen Flankenschutz versehen. Ein Elektromotor mit beispielsweise ca. 250 W mit Planetengetriebe ist in dem Gehäuse montiert und über den Lenkhebel 34 mit einer fahrzeugeigenen Lenkung verbunden. Die Elektronik wird beispielsweise von einem nicht dargestellten Akkusatz unabhängig von einer Bordbatterie gespeist.

Die Sicherheitsanforderungen bei diesem autonom steuernden Fahrzeug sind wesentlich höher als beim Anschleppen mit Seilzug. Eine beispielsweise über Schleppkabel oder Funk auslösbare Notbremse ist als eigenständiges System vorgesehen.

Für die Auswertung der Kamerasignale mit der optimalen Detektierung der Schwarzweißflanken und für die Taktrekonstruktion zur Geschwindigkeitsmessung ist die Auswerte- und Steuereinheit 20 vorgesehen, welche beispielsweise handelsübliche Hardwareschaltungen enthält. Diese sind bevorzugt als FPGAs (Field Programmable Gate Arrays) ausgeführt. Die Schaltungen der FPGAs sind dabei beispielsweise als Firmware gespeichert und können ohne Hardwareeingriffe modifiziert und gepflegt werden. Die Takterkennung wird fehlertolerant ausgeführt, d.h. beispielsweise ein PLL synchronisiert sich an den Flanken der Schwarz-Weiß-Übergange auf dem Leitband 26. Die Auslegung der PLL-Filter orientiert sich an den höchsten vorkommenden Beschleunigungswerten.

Die Steuerung umfaßt beispielsweise zwei leistungsstarken Microcontroller, welche sich mit ihren Programmen gegenseitig überwachen. Ein Verlassen des Fangbereichs der Kameras 22, 24 oder sonstige unplausible Fahrsituationen führen zu einer unverzüglichen Notbremse. Hierzu dienen bevorzugt mehrere unabhängig voneinander operierende Überwachungssysteme. Das Steuersystem ist optional mit CANbus Eingängen zur Übernahme und Überwachung von Daten aus dem Fahrzeugmanagement versehen. Mit der hohen Abtastrate der Zeilenkameras 22, 24 ist bevorzugt eine schnelle Regelung realisiert, die nur dadurch begrenzt ist, daß die Querablage wegen des Streifenmusters diskontinuierlich abgegriffen wird. Mit einem Streifenband 26 von 6 mm, wie beispielsweise in Fig. 3 dargestellt, ist bereits ab einer Geschwindigkeit von beispielsweise 1 m/s eine nutzbare Regelzykluszeit von 166 Hz vorhanden.

Für die zeitgesteuerte Lageregelung ist bevorzugt eine präzise Uhr vorgesehen, die beispielsweise über Funk mit einer Uhr eines Kollisionsgegners, d.h. einem anderen Crashfahrzeug, synchronisiert ist. Zur Synchronisation der Uhren von mehreren Fahrzeugen ist in einer bevorzugten Ausführungsform ein jeweiliger GPS-Empfänger vorgesehen.

Die Eingabe des Fahrprogramms mit der Vorgabe der Sollfunktionen, nach der Geschwindigkeit und Lage geregelt werden, erfolgt vor dem Start des Crashversuches beispielsweise mit einem angeschlossenen PC mit geeigneter Software. Diese simuliert für verschiedene Fahrzeugtypen mit deren jeweiligen Leistungsdaten zunächst eine Fahrkurve. Dabei werden bevorzugt zusätzlich Sicherheitstoleranzen bezüglich der Fahrdynamik abgeschätzt.

### BEZUGSZEICHENLISTE

- 10: Fahrbahn
- 12: Kraftfahrzeug
- 14: Fahrtrichtung
- 16: Markierungen
- 18: Markierungen
- 20: Auswerte- und Steuereinheit
- 22: CCD-Kamera
- 24: CCD-Kamera
- 26: Leitband
- 28: diskrete Markierungen
- 30: Montageplatte
- 32: Abstand
- 34: Lenkhebel
- 36: Beleuchtungseinrichtung
- 38: Beleuchtungseinrichtung

## Patentansprüche

1. Simulationsanordnung für Kraftfahrzeugunfälle mit einer Fahrbahn (10), auf der wenigstens ein Kraftfahrzeug (12) auf einen Kollisionspunkt mit einem Hindernis oder einem anderen Kraftfahrzeug zubewegbar ist,
dadurch gekennzeichnet, daß
auf der Fahrbahn (10) diskrete Markierungen (16,18;28) angeordnet sind und am Fahrzeug (12) ein Abtastsystem (20,22,24) angeordnet ist, welches die diskreten Markierungen (16,18;28) auf der Fahrbahn (10) registriert, wobei die Markierungen (16,18;28) und das Abtastsystem (20,22,24) derart ausgebildet sind, daß eine mit dem Abtastsystem (20,22,24) verbundene Steuereinheit (20) entsprechende automatische Steuerfunktionen am Fahrzeug (12) derart ausführt, daß sich das Fahrzeug (12) entlang der Markierungen (16,18;28) mit einer vorbestimmten Geschwindigkeit bewegt.

2. Simulationsanordnung nach Anspruch 1,
dadurch gekennzeichnet, daß
die Markierungen (16,18;28) optische, radioaktive, fluoreszierende, erhabene, vertiefte und/oder induktive Markierungen sind und das Abtastsystem (20,22,24) ein optisches, Radioaktivität erfassendes, Erhebungen/Vertiefungen erfassendes, Fluoreszenz erfassendes und/oder induktives Abtastsystem ist.

3. Simulationsanordnung nach Anspruch 1 oder 2,
dadurch gekennzeichnet, daß
die Markierungen (16,18;28) derart ausgebildet sind, daß sie einen hohen Kontrast zu einem Hintergrund haben.

4. Simulationsanordnung nach einem der vorhergehenden Ansprüche,
dadurch gekennzeichnet, daß
die Markierungen (16,18;28) weiß auf schwarzem Hintergrund ausgebildet sind.

5. Simulationsanordnung nach einem der vorhergehenden Ansprüche,
dadurch gekennzeichnet, daß
die Markierungen (16,18;28) als Streifenraster oder Codiert, insbesondere als Manchester Code, ausgebildet sind.

6. Simulationsanordnung nach einem der vorhergehenden Ansprüche,
dadurch gekennzeichnet, daß
wenigstens eine Markierung (16,18;28) als individuell erkennbare Markierung ausgebildet ist.

7. Simulationsanordnung nach einem der vorhergehenden Ansprüche,
dadurch gekennzeichnet, daß
die Markierungen (16,18;28) als wenigstens ein Strang, insbesondere als zwei oder mehr Stränge mit vorbestimmtem Abstand quer zur Fahrtrichtung (14), ausgebildet sind.

8. Simulationsanordnung nach einem der vorhergehenden Ansprüche,
dadurch gekennzeichnet, daß
die Abtastvorrichtung wenigstens zwei CCD-Kameras (22,24) umfaßt.

9. Simulationsanordnung nach Abspruch 8,
dadurch gekennzeichnet, daß
die CCD-Kameras (22,24) auf wenigstens einer Linie parallel zur Fahrtrichtung (14) des Kraftfahrzeuges (12) angeordnet sind.

10. Simulationsanordnung nach einem der vorhergehenden Ansprüche,
dadurch gekennzeichnet, daß
die Steuereinheit eine Auswerte- und Steuerungselektronik (20) aufweist.

11. Simulationsanordnung nach einem der vorhergehenden Ansprüche,
dadurch gekennzeichnet, daß
die Markierungen (16,18;28) auf wenigstens einem auf der Fahrbahn verlegten Leitband (26) oder wenigstens einer auf der Fahrbahn verlegten Folie angeordnet sind.

12. Verfahren zur Simulation von Kraftfahrzeugunfällen, wobei wenigstens ein Kraftfahrzeug auf einer Fahrbahn auf einen Kollisionspunkt mit einem Hindernis oder einem anderen Kraftfahrzeug zubewegt wird,
dadurch gekennzeichnet, daß
auf der Fahrbahn angeordnete diskrete Markierungen von einem im Fahrzeug angeordneten Abtastsystem registriert werden und eine mit dem Abtastsystem verbundene Steuereinheit entsprechende automatische Steuerbefehle zum Steuern des Fahrzeugs derart erzeugt werden, daß das Fahrzeug entlang der Markierungen mit einer vorbestimmten Geschwindigkeit bewegt wird.

13. Verfahren nach Anspruch 12,
dadurch gekennzeichnet, daß
eine optische, radioaktive, fluoreszierende, erhabene, vertiefte und/oder induktive Markierungen verwendet werden und ein entsprechendes optisches, Radioaktivität erfassendes, Erhebungen/Vertiefungen erfassendes, Fluoreszenz erfassendes und/oder induktives Abtastsystem verwendet wird.

14. Verfahren nach Anspruch 12 oder 13
dadurch gekennzeichnet, daß
ein in den diskreten Markierungen enthaltender Code zur Lagebestimmung des Kraftfahrzeugs ausgewertet wird.
